# EUROPEAN PATENT APPLICATION

(11) **EP 0 989 078 A2**
(43) Date of publication of application: **29.03.2000**
(21) Application number: 99111060.2
(22) Date of filing: 15.06.1999
(51) Int. Cl.: B65G 15/34, B32B 27/12

(54) **Conveyor belt**

(30) Priority: 16.06.1998 JP 16851498
(71) Applicant: Bridgestone Corporation, Tokyo (JP)
(72) Inventor: Nishikita, Yukinobu, Kodaira-shi, Tokyo (JP); Nagaoka, Isao, Yokohama-shi, Kanagawa-ken (JP)
(74) Representative: Dr. Weitzel & Partner

(57) **Abstract**

In a conveyor belt, a cord reinforcement layer (3,4,5,6,7) is provided between uppermost (1) and lowermost (2) rubber layers. The cord reinforcement layer comprises a first bias cord layer (4) which has cords (4a) inclined at an angle α1 and a second bias cord layer (5) which has cords (5a) inclined at an angle α2 which is equal to the angle α1 in a direction opposite to the cords of the front bias cord layer, thereby providing lateral rigidity adequately.

## Description

### BACKGROUND OF THE INVENTION

The present invention relates to a conveyor belt for conveying material.

In a conventional conveyor belt, a reinforcement layer is generally provided between an uppermost rubber layer and a lowermost rubber layer. The reinforcement layer contains a nylon fiber fabric, a polyester fiber fabric, steel cords and aramid fiber cords, in which the cords are put in a longitudinal direction of the belt.

Bending rigidity is an important factor in a belt conveyor, and especially, lateral rigidity is the most important factor for affecting conveying performance of the conveyor belt. If lateral rigidity is too high, it is likely to cause meandering owing to poor trough, load spilling involved therewith, deviated abrasion in ears and inadequate trough, but if lateral rigidity is too low, it is likely to cause deviated abrasion, cracking and separation of a cover rubber on the lower surface owing to falling down between rollers.

To determine lateral rigidity adequately, the number of plies or the number of wefts is varied.

There are inevitable various problems in the conventional method. If the number of plies increases, the smallest diameter of a pulley for supporting a tubular belt conveyor increases to make high cost. To vary the number of the wefts, it is necessary to increase kinds of fabrics to make high cost. To study and develop such fabrics, it is necessary to take a lot of time and labors to increase the number of steps for construction, which causes high cost.

### SUMMARY OF THE INVENTION

In view of the above disadvantages, it is an object of the present invention to provide a conveyor belt in which lateral rigidity of a conveyor belt can be determined without variation in the number of plies and wefts to determine vertical elasticity and rigidity suitably.

According to one aspect of the present invention, there is provided a conveyor belt which comprises an uppermost rubber layer, a lowermost rubber layer and a cord reinforcement layer between the uppermost and lowermost rubber layers, the cord reinforcement layer comprising:
a first bias cord layer which has a plurality of cords which are inclined at an angle with respect to a longitudinal axis; and
a second bias cord layer which has a plurality of cords which are inclined at the same angle as that of the cords of the first bias cord layer in a direction opposite to that of the cords of the first bias cord layer.

Without varying the number of plies and wefts, lateral rigidity of the conveyor belt is suitably determined.

According to another aspect of the present invention, there is provided a conveyor belt which comprises an uppermost rubber layer, a lowermost rubber layer and a cord reinforcement layer between the uppermost and lowermost rubber layers, said cord reinforcement layer having a plurality of cords which are perpendicular to a longitudinal axis of the belt.

Thus, decrease in rigidity can be reduced.

### BRIEF DESCRIPTION OF THE DRAWINGS

The features and advantages of the present invention will become more apparent from the following description with respect to embodiments as shown in attached drawings wherein:
Fig. 1 is a partial perspective view which illustrates one embodiment of a conveyor belt according to the present invention; and
Fig. 2 is a partial perspective view which illustrates a tubular conveyor belt to which the present invention is applied.

### DETAILED DESCRIPTION OF PREFERRED EMBODIMENTS

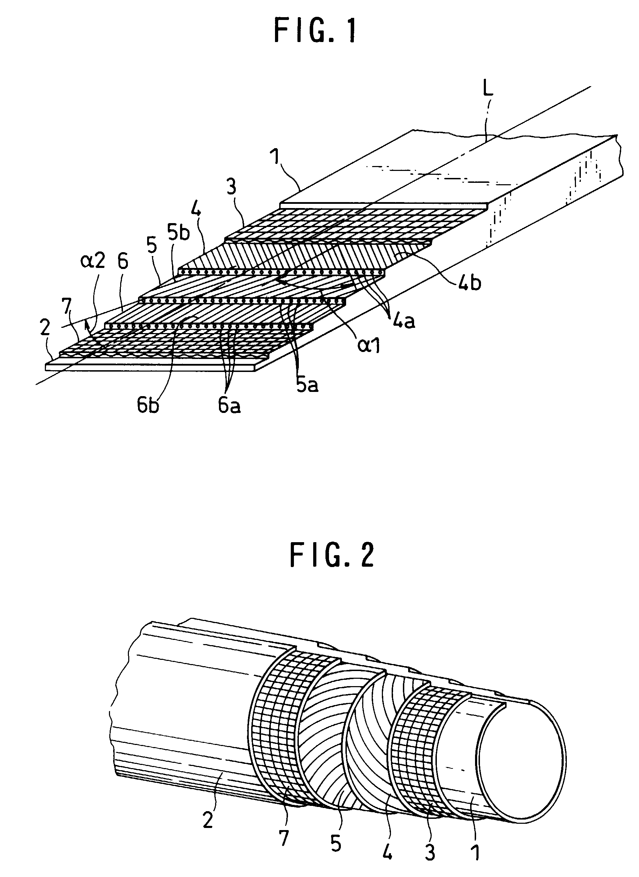

In one embodiment of a conveyor belt according to the present invention, five reinforcement layers or plies are provided between an uppermost rubber layer 1 and a lowermost rubber layer 2. Under the uppermost rubber layer 1, a synthetic fiber reinforcement layer 3 such as nylon or polyester fiber fabric is provided. The synthetic fiber reinforcement layer 3 has as a core a fabric to which warps which extend longitudinally of the conveyer belt and wefts which extend laterally are woven and embedded in a rubber. Two cord reinforcement layers next thereto are first and second bias cord layers 4,5 which are features of the present invention. In the bias cord layers 4,5, a plurality of cords 4a,5a made of steel or synthetic resin such as aramid fiber are inclined at angles α 1, α 2 with respect a longitudinal axis "L" of the conveyor belt at intervals in which cured rubbers 4b, 5b are inserted to connect adjacent cords 4a, 4a, 5a, 5a to each other. The angles of inclination α 1, α 2 range from 0 to 90° , and may be about 45° as shown in an embodiment of Fig. 1.

In the second bias cord layer 5, cords 5a are inclined at the same angle α 2 as the angle α 1 of the cords 4a in a direction opposite to the cords 4a in the first bias cord layer 4. The first and second bias cord layers 4,5 are arranged as a set. In the embodiment of Fig. 1, one set is shown, but if desired, two or more sets of bias cord layers having, for example, 30° and 60° may be provided.

Under the bias cord layer 5, there is a cord layer 6 in which a plurality of longitudinal cords 6a are embedded in a rubber 6b. Under the cord layer 6, there is a synthetic fiber reinforcement layer 7 similar to the synthetic fiber reinforcement layer 3, and there is a cover rubber layer 2 thereunder. The layers are bonded by an adhesive or revulcanization of the rubbers to each other.

In this embodiment, there are two synthetic fiber reinforcement layers 3,7, but one to seven layers of such synthetic fiber reinforcement layers may be provided. A plurality of cord layers 6 may be provided.

The second embodiment in Fig. 2 relates to a tubular conveyor belt wherein material is conveyed in a substantially cylindrical hollow belt. The belt comprises six layers which are an uppermost rubber layer 1, a synthetic fiber reinforcement layer 3, a first bias cord layer 4, a second bias rubber layer 5, a synthetic fiber reinforcement layer 7 and a lowermost rubber layer 2. In formation, rolling-up tendency is applied to the belt.

At least one of the cord reinforcement layers may have a plurality of cords which extend in a direction perpendicular to a longitudinal direction of the belt.

Thus, in a conveyor belt for a tubular belt conveyor, in a general fabric structure, when it is laterally bent, shrinkage of the fabric is stretched to decrease rigidity. According to the present invention, decrease in rigidity can be reduced.

The foregoing relate to embodiments of the invention. Various modifications and changes may be made by person skilled in the art without departing from the scope of claims wherein:

## Claims

1. A conveyor belt which comprises an uppermost rubber layer, a lowermost rubber layer and a cord reinforcement layer between said uppermost and lowermost rubber layers, said cord reinfordement layer comprising:
a first bias cord layer which has a plurality of cords which are inclined at an angle with respect to a longitudinal axis; and
a second bias cord layer which has a plurality of cords which are inclined at the same angle as that of the cords of the first bias cord layer in a direction opposite to that of the cords of the first bias cord layer.

2. The conveyor belt as defined in claim 1 wherein the angle of inclination of the cords is between 0 and 90°.

3. The conveyor belt as defined in claim 2 wherein the angle of inclination of the cords is about 45° .

4. The conveyor belt as defined in claim 2 wherein the cord reinforcement layer has a code layer which has a plurality of longitudinal cords.

5. The conveyor belt as defined in claim 1 wherein the cords are made of steel.

6. The conveyor belt as defined in claim 1 wherein the cords are made of synthetic fiber.

7. The conveyor belt as defined in claim 1 wherein synthetic fiber reinforcement layer is provided between the uppermost and lowermost rubber layers.

8. The conveyor belt as defined in claim 1 wherein the belt is a tubular belt.

9. A conveyor belt which comprises an uppermost rubber layer, a lowermost rubber layer and a cord reinforcement layer between the uppermost and lowermost rubber layers, said cord reinforcement layer having a plurality of cords which are perpendicular to a longitudinal axis of the belt.

10. The conveyor belt as defined in claim 9 wherein the cords are made of steel.

11. The conveyor belt as defined in claim 9 wherein the cords are made of synthetic fiber.

12. The conveyor belt as defined in claim 9 wherein synthetic resin fiber reinforcement layer is provided between the uppermost and lowermost rubber layers.

13. The conveyor belt as defined in claim 9 wherein the belt is a tubular belt.
